# NEUE EUROPÄISCHE PATENTSCHRIFT

(11) **EP 2 113 650 B2**
(45) Veröffentlichungstag und Bekanntmachung des Hinweises auf die Entscheidung über den Einspruch: **09.08.2017**
(45) Hinweis auf die Patenterteilung: 24.07.2013
(21) Anmeldenummer: 09158857.4
(22) Anmeldetag: 27.04.2009
(51) Int. Cl.: F02M 35/02, B01D 46/10, B01D 46/00, B01D 46/52

(54) **Luftfiltergehäuse mit schwenkbarer Reinlufthaube**
Air filter housing with pivoting hood
Hotte à air pur pivotante

(30) Priorität: 28.04.2008 DE 102008021119
(43) Veröffentlichungstag der Anmeldung: 04.11.2009
(73) Patentinhaber: MANN+HUMMEL GmbH, 71638 Ludwigsburg (DE)
(72) Erfinder: Dirnberger, Timo, 71672 Marbach (DE); Rauschmaier, Jürgen, 74653 Ingelfingen (DE)
(74) Vertreter: Schmitz, Alexander

(56) Entgegenhaltungen:
- EP-A2- 1 433 947
- WO-A1-02/10575
- FR-A1- 2 922 269
- US-A- 5 295 602
- US-B1- 6 174 343

## Beschreibung

### Technisches Gebiet

Die Erfindung betrifft einen Luftfilter für eine Brennkraftmaschine nach den Merkmalen des Anspruchs 1.

### Stand der Technik

Aus der DE 80 13 069 U1 ist ein Filtergehäuse bekannt, bei dem zwischen einem Ober- und Unterteil, zwischen denen ein Filtereinsatz dicht einspannbar ist, ein Scharnier vorgesehen ist und um eine Scharnierachse das Filtergehäuse aufgeklappt werden kann. Das Scharnier ist lösbar ausgebildet. Ein Lösen des Scharniers ist allerdings erst bei einem Öffnungszustand von etwa 180° möglich.

Es ist ferner aus der DE 41 25 341 B4 ein zweiteiliges Luftfiltergehäuse für Verbrennungsmotoren bekannt, bei dem ebenfalls ein Gehäuseoberteil und ein Gehäuseunterteil über zweiteilige Scharniere aufklappbar sind. Die Scharniere bestehen aus zwei Scharnierhälften, wobei dort auch Verbindungselemente für eine lösbare Schnappverbindung vorgesehen sind. Die Schnappverbindung kann bei einem Öffnungswinkel von 30° gelöst werden. Auch dieses System benötigt einen bestimmten vordefinierten Öffnungswinkel, um das zweiteilige Luftfiltergehäuse zu trennen.
Die Schrift US 5 295 602 A offenbart ein zweiteiliges Luftfiltergehäuse mit einem rohluftseitigen Gehäuseunterteil und einem reinluftseitigen Gehäusedeckel. Zur Entnahme des Luftfilterelementes kann der Gehäusedeckel geschwenkt werden.
In der EP 1 433 947 A2 wird eine Filtervorrichtung beschrieben, die ein Filtergehäuse mit mehreren Kammern im Unterteil aufweist. Rohlufteinlass und Reinluftauslass münden in das Gehäuseunterteil. Zur Entnahme des Luftfilterelementes kann der Gehäusedeckel entfernt werden, ohne dass eine Luftleitung bewegt oder demontiert werden muss. Das Luftfilterelement ist im Gehäuseunterteil aufgenommen und gegen dieses abgedichtet. Das Gehäuseunterteil ist am Motor befestigt.
Das Dokument WO 02/10575 zeigt einen zweiteiligen Luftfilter, bei dem der Gehäusedeckel beim Schließen oder Öffnen des Luftfilters entlang einer bogenförmigen Führungsschiene gleitet, so dass ein Öffnen und Schließen unter beengten Einbauverhältnissen möglich ist. Zwischen Gehäuse und Deckel ist ein Filterelement innerhalb des Gehäuses eingespannt. Beim Öffnen des Luftfilters verbleibt das Filterelement im Gehäuse.
Aus der US 6 174 343 B1 ist ein Luftfilter mit einem zweiteiligen Gehäuse bekannt. Ein das Luftfilterelement aufnehmendes Unterteil wird mit ineinandergreifenden Zähnen mit dem Oberteil verbunden. Die Dichtung des Filterelementes stützt sich auf eine Wand des Unterteils ab.

Es wird ferner in der DE 196 38 790 A1 ein Luftfilter, insbesondere für die Ansaugluft einer Brennkraftmaschine mit einem, in einem Gehäuse angeordneten Filtereinsatz beschrieben, wobei das Gehäuse einen Rohlufteinlass und einen Reinluftauslass aufweist sowie eine Öffnung zum Einführen des Filtereinsatzes. Der Filtereinsatz besteht aus einem Trägerelement und einem Filterelement. An einer Dichtfläche ist unter Zwischenschaltung eines Dichtelements das Filterelement einlegbar. Das Gehäuse weist ein Anlageelement für den Filtereinsatz auf. Der Filtereinsatz führt zu dem Anlageelement beim Einsetzen eine Drehbewegung aus, wobei der Filtereinsatz mit einer um das Anlageelement geführten Schwenkbewegung in die Endposition gelangt. Zur zuverlässigen Koppelung des Filterelements in dem Luftfiltersystem ist hier ein zusätzliches Anlageelement zwischengeschaltet, außerdem ist ein Trägerelement vorgesehen.

Gerade bei der Verwendung von Flachfiltern, d. h. zick-zack-förmig gefaltete Rechteck- oder quadratische Filterelemente, die eine umlaufende Dichtung aufweisen, ist es von Nachteil, wenn dieses Filterelement ein zusätzliches Rahmenelement benötigt, um aus einem Gehäuse entnommen zu werden. Der wesentliche Unterschied zu der Verwendung von Rundfilterelementen liegt darin, dass bei einem Rundfilterelement durch ein einfaches Herausziehen oder ein Bewegen des zylinderförmigen Gehäuses in axialer Richtung ein solches Rundfilterelement von einer kreisförmigen Dichtung oder einem Dichtungsflansch gelöst werden kann.

Der Erfindung liegt daher die Aufgabe zugrunde, einen Luftfilter für eine Brennkraftmaschine zu schaffen, wobei ein Filterelement in Form eines Flachfilters in einfacher Weise ohne aufwendige Montage- oder Demontageschritte entnommen oder eingebaut werden kann. Diese Aufgabe wird durch die Merkmale des unabhängigen Anspruchs 1 gelöst.

### Offenbarung der Erfindung

Der wesentliche Vorteil der Erfindung ist darin zu sehen, dass ein geringfügiges Schwenken einer Reinlufthaube oder eines Rohluftgehäuses durchgeführt werden kann und das Filterelement eine umlaufende Dichtung aufweist, die eine Abdichtung zwischen den beiden Gehäuseteilen bildet und nach dem Schwenken eines der beiden Gehäuseteile ein Lösen und eine Herausnahme des Filterelements möglich ist.

Das Filterelement erstreckt sich ausgehend von der Dichtungsebene, d. h. der umlaufend am Filterelement angeformten Dichtung, vollständig in das Gehäuse, welches abgekippt und nach außen geführt werden kann. Damit besteht weder bei der Montage noch bei der Demontage die Gefahr, dass Schmutz, welcher sich an dem Filterelement befindet, im Inneren eines Gehäuseteils verbleibt und zum Schmutzeintrag in die Brennkraftmaschine führen würde.

Damit eines der beiden Gehäuseteile von dem anderen Gehäuseteil wegbewegt werden kann, ist es erforderlich, einen Abkippwinkel von 15° oder maximal 20° vorzusehen. Dies reicht aus, um die Dichtung am Filterelement von dem Dichtungsgegenstück zu entfernen und die beiden Gehäuseteile voneinander zu lösen.

Weiterbildungsgemäß wird ferner ein Handlingverfahren zum Austausch eines Filterelements an einer Brennkraftmaschine beschrieben. Durch den erfindungsgemäßen Aufbau des Gesamtsystems ist ein Filterelement mit wenigen Handgriffen an einer Brennkraftmaschine zu ersetzen.

Diese und weitere Merkmale werden nicht nur in den Patentansprüchen sondern auch in der Beschreibung und den Zeichnungen dargestellt.

### Kurze Beschreibung der Zeichnungen

Die Erfindung wird nachfolgend erläutert. Es zeigen
- Figur 1: einen Luftfilter für eine Brennkraftmaschine,
- Figur 2: den in Figur 1 gezeigten Luftfilter mit geöffneter Reinlufthaube,
- Figur 3: zwei Luftfilter an einer Brennkraftmaschine,

### Ausführungsform der Erfindung

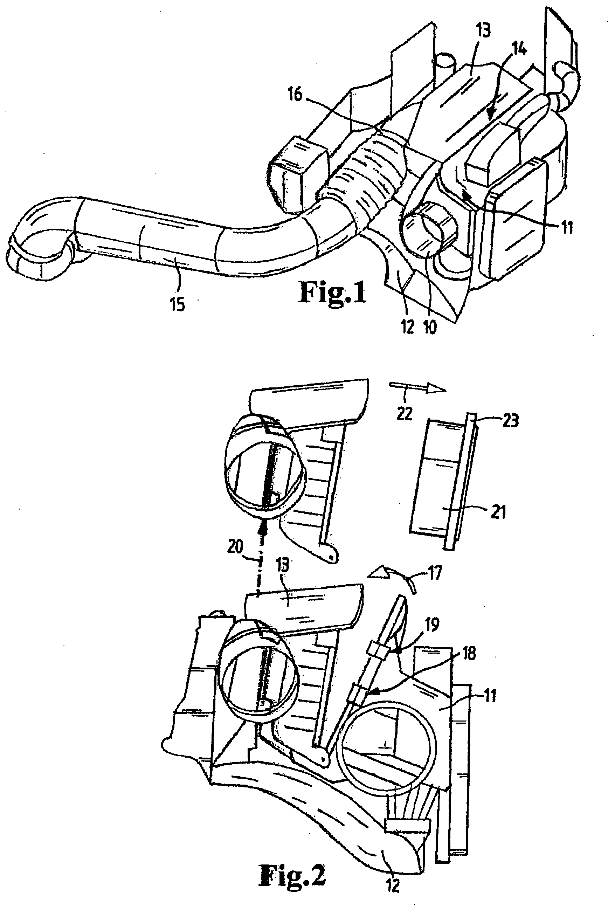

Der in Figur 1 dargestellte Luftfilter für Brennkraftmaschinen zeigt schematisch den Rohlufteinlass 10, der an dem Rohluftgehäuse 11 vorgesehen ist. Das gesamte System ist oberhalb einer hier nur schematisch dargestellten Brennkraftmaschine 12 angeordnet. Von dieser Brennkraftmaschine 12 sind verschiedene Wandelemente gezeichnet, die zunächst ohne Bedeutung sind, allerdings zeigen sollen, dass für den Austausch eines Filterelements nur wenig Platz zur Verfügung steht. Eine Reinlufthaube 13 ist im Bereich 14 mit dem Rohluftgehäuse 11 verbunden. Diese Reinlufthaube 13 besitzt einen Reinluftanschluss 15, der bis zu einem Reinluftstutzen 16 an der Reinlufthaube 13 führt. Innerhalb der Reinlufthaube 13 befindet sich ein weiter unten beschriebenes Filterelement.

Figur 2 zeigt von vorne gesehen wiederum, wie in Figur 1, den Luftfilter für die Brennkraftmaschine. Gleiche Teile sind mit gleichen Bezugsziffern versehen. Die Reinlufthaube 13 ist bereits geringfügig von dem Rohluftgehäuse 11 gemäß Pfeil 17 nach links abgekippt. Beide Teile sind z. B. über Schnappverbindungen 18, 19 miteinander verbunden. Diese Schnappverbindungen können manuell gelöst werden. Nach dem Abkippen der Reinlufthaube 13 wird diese gemäß Pfeil 20 nach oben geschoben und löst sich von einem geöffneten Scharnier. Sobald sich die Reinlufthaube außerhalb der Motorstruktur befindet, kann ein darin angeordnetes Filterelement 21 gemäß Pfeil 22 entnommen werden. Das Filterelement besitzt eine umlaufende Dichtung 23, die für das Abdichten zwischen Reinlufthaube und Rohluftgehäuse sorgt. Das Filterelement selbst ist ein zick-zack-förmig gefaltetes, allgemein bekanntes rechteckförmiges Filterelement, das im eingebauten Zustand sich vollständig in der Reinlufthaube befindet. Selbstverständlich besteht auch die Möglichkeit, das Filterelement nicht rechteck-förmig zu gestalten, sondern mit anderen Außenformen zu versehen.

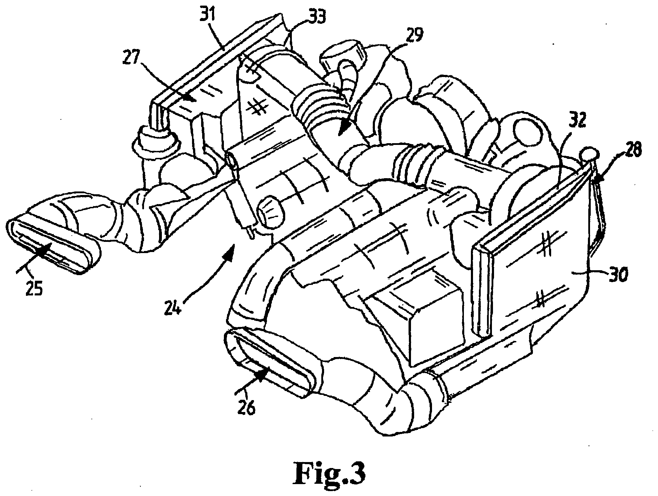

Figur 3 zeigt zwei Luftfilter an einer Brennkraftmaschine 24, wobei diese Brennkraftmaschine 24 ebenfalls nur schematisch dargestellt ist. Das Luftfiltersystem besitzt einen Rohlufteintritt 25 sowie einen Rohlufteintritt 26. Der Rohlufteintritt 25 führt zu einem Luftfiltersystem 27, Rohlufteintritt 26 führt zu einem Luftfiltersystem 28. Die in den Luftfiltersystemen 27, 28 gereinigte Luft gelangt über eine Reinluftleitung 29 zu der Brennkraftmaschine 24. Die beiden Luftfiltersysteme 27, 28 besitzen nach außen sich erstreckend eine Rohlufthaube 30, 31 und in diesem Fall ein Reinluftgehäuse 32 und ein Reinluftgehäuse 33 auf der linken Seite.

## Patentansprüche

1. Luftfilter für eine Brennkraftmaschine und eine den Luftfilter umgebende Brennkraftmaschinenstruktur, welcher aus zwei Gehäuseteilen besteht, und zwar einem Rohluftgehäuse (11, 31) und einer Reinlufthaube (13, 33), wobei an dem Rohluftgehäuse (11, 31) ein Rohluftanschlussstutzen und an der Reinlufthaube (13, 33) ein Reinluftanschlussstutzen (16) vorgesehen ist und wobei ein Filterelement (21) in den Gehäuseteilen (11, 13, 31, 33) angeordnet ist, wobei Reinlufthaube (13, 33) oder Rohluftgehäuse (11, 31) schwenkbar gelagert sind und das Filterelement (21) eine umlaufende Dichtung (23) aufweist, die eine Abdichtung zwischen den beiden Gehäuseteilen (11, 13, 31, 33) bildet, **dadurch gekennzeichnet, dass** sich das Filterelement (21) ausgehend von der Dichtungsebene, d. h. der umlaufend am Filterelement (21) angeformten Dichtung (23), vollständig in das Gehäuseteil (11, 13, 31, 33) erstreckt, welches mit dem darin angeordneten Filterelement (21) abgekippt und das Filterelement (21) nach dem Herausführen des Gehäuseteils (11, 13, 31, 33) aus der Brennkraftmaschinenstruktur aus dem Gehäuseteil (11, 13, 31, 33) entnommen werden kann.

2. Luftfilter und Brennkraftmaschinenstruktur nach Anspruch 1, wobei das Filterelement (21) ausgehend von der Dichtungsebene sich vollständig in die Reinlufthaube (13, 33) erstreckt.

3. Luftfilter und Brennkraftmaschinenstruktur nach Anspruch 1, wobei das Filterelement (21) ausgehend von der Dichtungsebene sich vollständig in das Rohluftgehäuse (11, 31) erstreckt.

4. Luftfilter und Brennkraftmaschinenstruktur nach einem der vorherigen Ansprüche, **dadurch gekennzeichnet, dass** zum Austausch des Filterelements (21) ein Abwinkeln der Reinlufthaube (13, 33) in Bezug auf die Normallage um etwa 15° erfolgt und eine Abnahme der Reinlufthaube (13, 33) bei Erreichen des Abnahmewinkels möglich ist.

## Claims

1. Air filter for an internal combustion engine and an internal combustion engine structure surrounding the air filter which consists of two housing components, namely a raw air housing (11, 31) and a clean air hood (13, 33), wherein a raw air connection piece is provided on the raw air housing (11, 31) and a clean air connection piece (16) is provided on the pure air hood (13, 33) and wherein a filter element (21) being disposed in the housing components (11, 13, 31, 33), the clean air hood (13, 33) or the raw air housing (11, 31) being pivotably mounted and the filter element (21) comprising a surrounding sealing (23) which forms a seal between the two housing components (11, 13, 31, 33), **characterized in that** the filter element (21), starting from the sealing plane, i.e. from the sealing (23) integrally molded around the filter element (21), extends completely into the housing component (11, 13, 31, 33) which can be tilted with the filter element (21) disposed therein and the filter element (21) can be removed from the housing component (11, 13, 31, 33) after removing the housing component (11, 13, 31, 33) from the internal combustion engine structure.

2. Air filter and internal combustion engine structure according to claim 1, wherein the filter element (21) starting from the sealing plane extends completely into the clean air hood (13, 33).

3. Air filter and internal combustion engine structure according to claim 1, wherein the filter element (21) starting from the sealing plane extends completely into the raw air housing (11, 31).

4. Air filter and internal combustion engine structure according to one of the preceding claims, **characterized in that**, for replacement of the filter element (21), a bending of the clean air hood (13, 33) by about 15° is carried out in relation to the normal position and a removal of the clean air hood (13, 33) is possible when the removal angle is reached.

## Revendications

1. Filtre à air pour un moteur à combustion interne et une structure de moteur à combustion interne environnant le filtre à air, constitué de deux parties de boîtier, à savoir d'un boîtier à air brut (11, 31) et d'une hotte à air pur (13, 33), une tubulure de raccord d'air brut étant prévue sur le boîtier à air brut (11, 31) et une tubulure de raccord d'air pur (13, 33) étant prévue sur la hotte à air pur (16), et un élément filtrant (21) étant disposé dans les parties de boîtier (11, 13, 31, 33), la hotte à air pur (13, 33) ou le boîtier à air brut (11, 31) étant logée/é de manière pivotante et l'élément filtrant (21) présentant un joint périphérique (23) qui assure l'étanchéité entre les deux parties de boîtier (11, 13, 31, 33), **caractérisé en ce que** l'élément filtrant (21) s'étend, à partir du plan d'étanchéité, c'est-à-dire du joint périphérique (23) formé tout autour de l'élément filtrant (21), totalement dans la partie de boîtier (11, 13, 31, 33) qui pivote avec l'élément filtrant (21) disposé à l'intérieur, et qu'il est possible de retirer l'élément filtrant (21) de la partie de boîtier (11, 13, 31, 33) après avoir dégagé la partie de boîtier (11, 13, 31, 33) de la structure de moteur à combustion interne.

2. Filtre à air et structure de moteur à combustion interne selon la revendication 1, l'élément filtrant (21) s'étendant, à partir du plan d'étanchéité, totalement dans la hotte à air pur (13, 33).

3. Filtre à air et structure de moteur à combustion interne selon la revendication 1, l'élément filtrant (21) s'étendant, à partir du plan d'étanchéité, totalement dans le boîtier à air brut (11, 31).

4. Filtre à air et structure de moteur à combustion interne selon l'une des revendications précédentes, **caractérisé en ce que** la hotte à air pur (13, 33) pivote d'environ 15° vers le bas par rapport à la position normale pour l'échange de l'élément filtrant (21) et qu'il est possible de retirer la hotte à air pur (13, 33) une fois que l'angle de retrait est atteint.
